# EUROPÄISCHE PATENTSCHRIFT

(11) **EP 2 940 418 B1**
(45) Veröffentlichungstag und Bekanntmachung des Hinweises auf die Patenterteilung: **26.09.2018**
(21) Anmeldenummer: 15150101.2
(22) Anmeldetag: 05.01.2015
(51) Int. Cl.: F28F 25/06, F28F 21/06

(54) **Flüssigkeitsverteileinrichtung**
Liquid distribution device
Dispositif de distribution de liquide

(30) Priorität: 15.04.2014 DE 202014101774 U
(43) Veröffentlichungstag der Anmeldung: 04.11.2015
(73) Patentinhaber: CTS Cooling Tower Solutions GmbH, 40627 Düsseldorf (DE)
(72) Erfinder: Streng, Andreas, Dr., 40627 Düsseldorf (DE)
(74) Vertreter: Rausch Wanischeck-Bergmann Brinkmann

(56) Entgegenhaltungen:
- CN-Y- 201 032 408
- JP-A- H1 183 385
- JP-Y1- S4 734 944
- US-A- 4 444 696
- US-A- 4 543 218

## Beschreibung

Die Erfindung betrifft eine Kühfturmwasserkühfeinrichtung für Kühltürme, mit einer Kühlturmwasserverteileinrichtung mit wenigstens einem Hauptverteilerrohr, wobei eine Mehrzahl von Nebenverteilerrohren an das wenigstens eine Hauptverteilerrohr angeschlossen sind, wobei die Nebenverteilerrohre mit Düsen ausgerüstet und aus einem glasfaserverstärkten Kunststoff (GFK) gebildet sind.

Kühltürme und auch Kühlturmwasserkühleinrichtungen für Kühltürme sind aus dem Stand der Technik an sich bekannt, weshalb es eines gesonderten druckschriftlichen Nachweises an dieser Stelle nicht bedarf.

Es sei deshalb auch nur exemplarisch auf die US 4,543,218 A verwiesen, die eine gattungsgemäße Kühlturmwasserkühleinrichtung und einen entsprechend damit ausgerüsteten Kühlturm offenbart. Der Oberbegriff des Anspruchs 1 ist aus US 4,543,218 A bekannt.

Aus dem Stand der Technik ist gemäß der US 4,444,696 A des Weiteren ein Fluidverteilsystem bekannt geworden, das über eine Mehrzahl von zu Reihen angeordneten Verteilerröhren verfügt, die im Querschnitt jeweils rechteckförmig ausgebildet sind.

Die JP S4734944 A, die CN 201032408 Y und die JP H1183385 A offenbaren jeweils ebenfalls Verteilersysteme für Flüssigkeiten, die zumindest teilweise über im Querschnitt rechteckförmig ausgestaltete Verteilertröge oder -rohre verfügen.

In Fluidkühleinrichtungen wird in der Regel eine Flüssigkeit an einem Gas zum Zwecke der Energieübertragung vorbeigeführt. Dabei ist die Kühlung entweder der Flüssigkeit oder des Gases beabsichtigt, wobei stets auch eine Teilmenge der Flüssigkeit verdunstet oder auch wieder kondensiert. Umgekehrt kann aber auch ein Aufheizen eines der beiden aneinander vorbeigeführten Fluide bei prinzipiell gleichem Aufbau der Fluidkühleinrichtung beabsichtigt sein. Es handelt sich dann um eine Fluidheizeinrichtung. Um in jedem Fall eine möglichst gute Energieübertragung zwischen den beiden Fluiden erreichen zu können, ist stets eine Flüssigkeitsverteileinrichtung vorgesehen, mittels welcher die Flüssigkeit möglichst gleichmäßig über den Querschnitt des Apparates - also des Kühlturms - verteilt wird. Sofern die Flüssigkeit nicht vollständig innerhalb der Einrichtung verdunstet oder verdampft wird, kann die verbleibende Flüssigkeit in einer geeigneten Auffangvorrichtung gesammelt werden.

Kühltürme dienen der Abkühlung eines Fluids, beispielsweise einer Flüssigkeit. Bei dem abzukühlenden Fluid handelt es sich häufig um Wasser. Es sind aber auch Säurekühltürme gebräuchlich, d.h. eine Säure wird im Kühlturm mittels Umgebungsluft ebenfalls nach dem Prinzip der Verdunstungskühlung gekühlt. Es können aber auch andere Flüssigkeiten oder Gase innerhalb eines Kühlturms zur Abkühlung gebracht werden wie z.B. Luft zum Zwecke der Raumklimatisierung.

Alle diese Fluidkühleinrichtungen verfügen zur gleichmäßigen Versprühung der zu kühlenden Flüssigkeit über eine Flüssigkeitsverteileinrichtung wie sie insbesondere aus der EP 2 304 372 B1 bekannt geworden ist. Die dort beschriebene Flüssigkeitsverteileinrichtung verfügt über eine Mehrzahl von Verteilerrohren, die an wenigstens ein gemeinsames Zulaufrohr flüssigkeitsseitig angeschlossen sind. Die Rohre weisen allesamt einen runden Querschnitt auf, wobei die Verteilerrohre hierbei jeweils über eines Ihrer beiden längsseitigen Enden mit dem Zulaufrohr über Ausnehmungen in der Seitenwand des Zulaufrohrs miteinander verbunden sind.

Obgleich sich insbesondere runde Rohrquerschnitte aufgrund ihrer überlegenen Strömungs-, Festigkeits- und Fertigungseigenschaften in der Praxis bewährt haben, besteht Verbesserungsbedarf in verschiedener Hinsicht.

Es werden i.d.R. Rohre aus gewichtssparenden Kunststoffen wie Polyvinylchlorid (PVC), Polypropylen (PP), Glasfaserverstärkter Kunststoff (GFK) und Polyethylen (PE) zur leichteren Montage und zur Vermeidung von Korrosionsschäden eingesetzt. Wenn diese Leichtbaurohre im Betrieb mit Wasser gefüllt sind, dann neigen diese Rohre zum Durchbiegen - insbesondere bei höheren Temperaturen von z.B. bis 60 °C (max. Einsatzgrenze von PVC). Das Wasser kann bei Entleerung nicht mehr ablaufen und friert bei Frost ein und die Rohre können im schlimmsten Fall brechen. Zwar kann man mit der Werkstoffwahl GFK, PP oder anderen die max. Einsatztemperaturen noch erhöhen. Der Werkstoff GFK weist auch generell höhere Festigkeitseigenschaften auf, so dass diesem Problem des Durchbiegens entgegengewirkt werden kann. Allerdings ist die Herstellung von Rohren aus diesen Werkstoffen, insbesondere aus GFK, sehr aufwendig, was in der Konsequenz zu unwirtschaftlichen Produktionskosten solcher Rohre führt.

Da Rundrohre auf den lastabtragenden Balken nur linienförmig aufliegen, wird das Stabilitätsproblem noch verstärkt. Im Ergebnis müssen relativ enge Unterstützungsabstände der lasttragenden Balken des Kühlturms gewählt werden, um ein Durchbiegen und Folgeschäden zu vermeiden. Dies erhöht in nachteiliger Weise den Konstruktionsaufwand der Flüssigkeitsverteileinrichtung und führt damit zu einer Erhöhung der Kosten der gesamten Konstruktion.

Es hat sich auch die Praxis durchgesetzt, dass die Tropfenabscheider eines Kühlturms, die bevorzugt als Lamellenabscheider ausgeführt werden, quer über die Rundrohre der Wasserverteilung verlegt werden. Die einzelnen Lamellen, die zu Feldern des Tropfenabscheiders zusammengesteckt werden, liegen aber jeweils nur punktförmig auf den Rundrohren auf. Da aus Gründen des sparsamen Materialeinsatzes relativ dünne Lamellen aus PVC, PP u.a. verwendet werden, biegen sich hier die Lamellen mit der Zeit durch und werden geschädigt, bis sie ihre Funktion nicht mehr erfüllen können.

Ausgehend vom Vorbeschriebenen ist es die **Aufgabe** der Erfindung, eine Kühlturmwasserkühleinrichtung der vorgenannten Art derart weiterzubilden, dass die vorbeschriebenen Nachteile des Standes der Technik überwunden werden.

Zur **Lösung** dieser Aufgabe wird mit der Erfindung eine Kühlturmwasserkühleinrichtung mit den Merkmalen nach Anspruch 1 vorgeschlagen.

Die erfindungsgemäße Kühlturmwasserkühleinrichtung zeichnet sich durch im Besonderen ausgestaltete Nebenverteilerrohre aus. Diese sind nicht mit rundem Querschnitt ausgebildet, sondern über ihre gesamte Längserstreckung mit rechteckigem Querschnitt. Der Vorteil dieser eckigen Ausgestaltung liegt in der damit erreichten flächigen Auflage der neuen Rohrkontur auf den rechteckig geformten, tragenden Unterbalken der Wasserverteilung. Außerdem gewährt ein rechteckiges Nebenverteilerrohr den darauf ruhenden Tropfenabscheidern eine bessere linienförmige Lastableitung. Hierdurch wird in erfindungsgemäßer Weise sowohl die Auflagerung auf den Unterbalken wie auch die Lastaufnahme aus den aufliegenden Tropfenabscheidern deutlich vergleichmäßigt und ein Durchbiegen der Nebenverteilerrohre und der Tropfenabscheider vermindert oder sogar in Gänze vermieden.

Bei dieser Vorgehensweise wird bewusst in Abkehr von der allgemeinen Lehre des Standes der Technik gehandelt und die Nachteile von eckigen Rohrquerschnitten insbesondere hinsichtlich des Strömungsverhaltens in Kauf genommen. Es hat sich nämlich in überraschender Weise gezeigt, dass die wasserseitigen Druckverluste in Vierkantrohren kaum diejenigen in Rundrohren übersteigen, da Wasserverteilungen in Kühltürmen erfahrungsgemäß nur mit geringen Rohrinnengeschwindigkeiten von 1 bis max. 2 m/s ausgelegt werden. Bei solch moderaten Geschwindigkeiten hat die Rohrform nur einen untergeordneten Einfluß auf den Druckverlust und die Gleichmäßigkeit der Wasserverteilung innerhalb des gesamten Wasserverteilsystems. Die mit der erfindungsgemäßen eckigen Rohrausgestaitung der Nebenverteilerrohre erreichten Vorteile hinsichtlich der mechanischen Stabilität überwiegen daher die mit ihnen ansonsten verbundenen Nachteile.

Eckig im Sinne der Erfindung bezeichnet hierbei auch eine im Wesentlichen eckige Ausgestaltung mit abgerundeten Ecken, insbesondere abgerundeten Innenecken. Es hat sich gezeigt, dass abgerundete Ecken insbesondere hinsichtlich einer erhöhten Fertigungsqualität und einer homogenen Spannungsverteilung innerhalb des Rohres besonders vorteilhaft sind. Vorzugsweise sind die abgerundeten Ecken hierbei mit einem bestimmten Innenradius (r) ausgebildet, beispielsweise einem Radius von 2 mm - 20 mm, vorzugsweise von 8 mm - 17 mm, mehr bevorzugt von 15 mm, je nach Dicke der Wandung. Gemäß einer bevorzugten Ausführungsform sind die Außenkanten der Rohre eckig ausgestaltet, womit winklig zueinander stehende Anlagen- und/oder Auflagerflächen ausgebildet sind. Innenseitig sind diese Kanten abgerundet ausgebildet, beispielsweise durch Verstärkung der Rohrwandung im Kantenübergangsbereich. Hierdurch entsteht eine abgerundete Innenausgestaltung, beispielsweise mit einem Innenradius von ca. 10 mm - 20 mm. Alternativ kann eine solche abgerundete Eckausgestaltung auch hinsichtlich der äußeren Kantenausgestaltung vorgesehen sein. Erfindungswesentlich ist indes, dass die Querschnittsausgestaltung im Wesentlichen viereckförmig ist, was im Sinne des Vorbeschriebenen mit einschließt, dass zumindest innenseitig abgerundete Ecken bzw. Eckkantenverläufe vorgesehen sein können.

Ermöglicht wird die erfindungsgemäße Verwendung von Verteilerrohren mit eckigem Querschnitt in der erfindungsgemäßen Kühlturmwasserkühleinrichtung erst durch das besondere Rohrmaterial. Dieses ermöglicht die Herstellung von Rohren mit der nötigen Stabilität. Es wird hierfür ein glasfaserverstärkter Kunststoff eingesetzt. Ein glasfaserverstärkter Kunststoff ist von Vorteil aufgrund seiner exzellenten mechanischen Eigenschaften, seiner Korrosionsunfähigkeit und seines gleichzeitig geringen Gewichts. Rohre aus normalem Kunststoff oder einem Leichtmetall wie insbesondere Aluminium müssen aufgrund der mangelnden mechanischen Steifigkeit insbesondere in Längsrichtung des Rohres in einer derart hohen Wandstärke hergestellt werden, dass es sich aus ökonomischer Sicht nicht lohnt, diese in eckiger Querschnittsausgestaltung zu fertigen. Der eckige Querschnitt der Rohre und das verwendete Material führen somit in synergetischer Weise zu einer deutlich erhöhten Steifigkeit, die wesentlich größere Stützweiten der Unterbalken ermöglicht, ohne dass die Wandstärke kostenträchtig erhöht werden müsste.

Insgesamt sind damit deutlich größere Spannweiten für die Unterzüge der Verteileinrichtung möglich oder können bei kleinen Kühltürmen sogar ganz entfallen, wodurch Materialeinsatz und Montageaufwand im erheblichen Umfang reduziert werden. Mit weniger Unterzügen wird darüber hinaus der luftseitige Druckverlust im Kühlturm reduziert und die Sprühverteilung des Wassers über den Kühleinbauten verbessert.

Vorteilhafterweise ermöglicht die erfindungsgemäße Ausgestaltung der Nebenverteilerrohre darüber hinaus ihre hilfsweise Begehung zu Montagezwecken und für Wartungsarbeiten. Unterstützend können auch Bohlen auf die nunmehr ebenen Flächen dieser stabileren Rohre aufgelegt werden, die die zusätzlichen Mannlasten problemlos tragen.

Gemäß einer bevorzugten Ausgestaltung der Erfindung weist das wenigstens eine Hauptverteilerrohr ebenfalls zumindest abschnittsweise einen eckigen Querschnitt auf.

Hierdurch kann in vorteilhafter Weise ebenfalls eine erhöhte Steifigkeit und Stabilität des Hauptverteilerrohrs und damit der gesamten Flüssigkeitsverteileinrichtung erreicht werden, ohne die Wandstärke des Hauptverteilerrohrs kostenträchtig zu erhöhen.

Die Montagen und Demontagen bei Wartungsarbeiten der erfindungsgemäßen Verteileinrichtung werden gemäß einer bevorzugten Ausgestaltung der Erfindung durch einfache Stecksysteme mittels Muffen und Manschetten weiter vereinfacht, wodurch der damit verbundene Wartungsaufwand verringert wird.

Gemäß einem weiteren bevorzugten Merkmal der Erfindung weist das wenigstens eine Hauptverteilerrohr über ihre gesamte wirksame Längserstreckung einen eckigen Querschnitt auf. Hierdurch ist in vorteilhafter Weise die Gesamtstabilität der eckig ausgebildeten Rohre verbessert und somit der gesamten Verteileinrichtung. Darüber hinaus ist die Herstellung, Anschlußausführung und Montage weitergehend vereinfacht, da das jeweilige Bauteil in lediglich einer einheitlichen Querschnittsform hergestellt wird.

Die Nebenverteilerrohre und/oder das wenigstens eine Hauptverteilerrohr sind als Vierkantrohre ausgebildet. Hierdurch stellen die Rohre in vorteilhafter Weise eine maximale horizontale Auflagefläche für den Unterbau und/oder die Tropfenabscheider zur Verfügung, was die mechanische Stabilität der Verteileinrichtung weiter erhöht. Darüber hinaus ist die Begehbarkeit der Rohre bei Wartungs- und Aufbauarbeiten in vorteilhafter Weise durch die Ausbildung einer maximalen begehbaren horizontalen Fläche erleichtert.

Gemäß einem besonders bevorzugten Merkmal der Erfindung sind die Nebenverteilerrohre aus wenigstens zwei miteinander verbindbaren Rohrteilen gebildet. Vorzugsweise sind die Rohrteile über eine Steckverbindung miteinander verbindbar. Hierzu ist bevorzugt ein rechteckiges Verbindungselement vorgesehen, welches insbesondere als Manschette ausgebildet ist. Aus Stabilitätsgründen ist die Manschette bevorzugt aus einem Faserverbundkunststoff gebildet. Diese bevorzugte Ausgestaltung erlaubt die einfache und mechanisch stabile Verbindung der Nebenverteilerrohre und ermöglicht damit die Anpassung der Verteileinrichtung an jede gewünschte Flüssigkeitsverteilfläche.

Weitere Merkmale und Vorteile der Erfindung ergeben sich aus der nachfolgenden Beschreibung anhand der Figuren. Dabei zeigen
- Fig. 1: eine aus dem Stand der Technik bekannte Ausgestaltung einer Flüssigkeitsverteileinrichtung in schematisch perspektivischer Darstellung;
- Fig. 2: eine erste erfindungsgemäße Ausgestaltung der Flüssigkeitsverteileinrichtung in schematisch perspektivischer Darstellung;
- Fig. 3: eine zweite erfindungsgemäße Ausgestaltung der Flüssigkeitsverteileinrichtung in schematisch perspektivischer Darstellung
- Fig. 4: eine dritte erfindungsgemäße Ausgestaltung der Flüssigkeitsverteileinrichtung in schematisch perspektivischer Darstellung;
- Fig. 5: eine bevorzugte Ausgestaltung der Nebenverteilerrohre in schematisch perspektivischer Darstellung;
- Fig. 6: eine weitere bevorzugte Ausgestaltung der Nebenverteilerrohre in schematisch perspektivischer Darstellung;
- Fig. 7: ein aus dem Stand der Technik bekannter Kühlturm in schematisch perspektivischer Darstellung;
- Fig. 8: Kühlturm nach Fig. 7 mit der erfindungsgemäßen Ausgestaltung nach Fig. 2 in schematisch perspektivischer Darstellung.

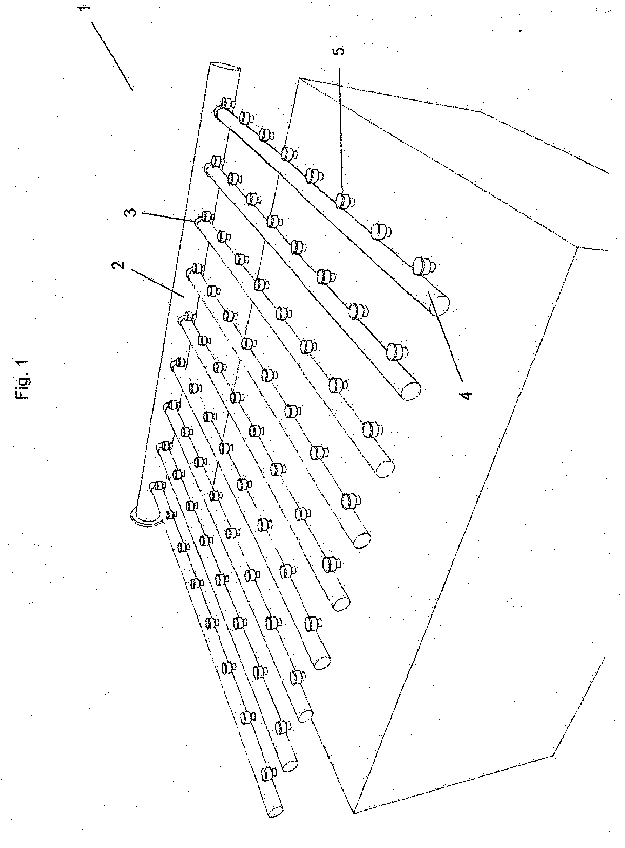

Fig. 1 zeigt eine aus dem Stand der Technik bekannte Flüssigkeitsverteileinrichtung 1 mit einem Hauptverteilerrohr 2. Das Hauptverteilerrohr 2 weist einen runden Querschnitt auf und verfügt über runde Ausnehmungen 3 zur Verbindung mit den Nebenverteilerrohren 4. Die Nebenverteilerrohre weisen ebenfalls einen runden Querschnitt auf und verfügen über tangential angesetzte Düsen 5.

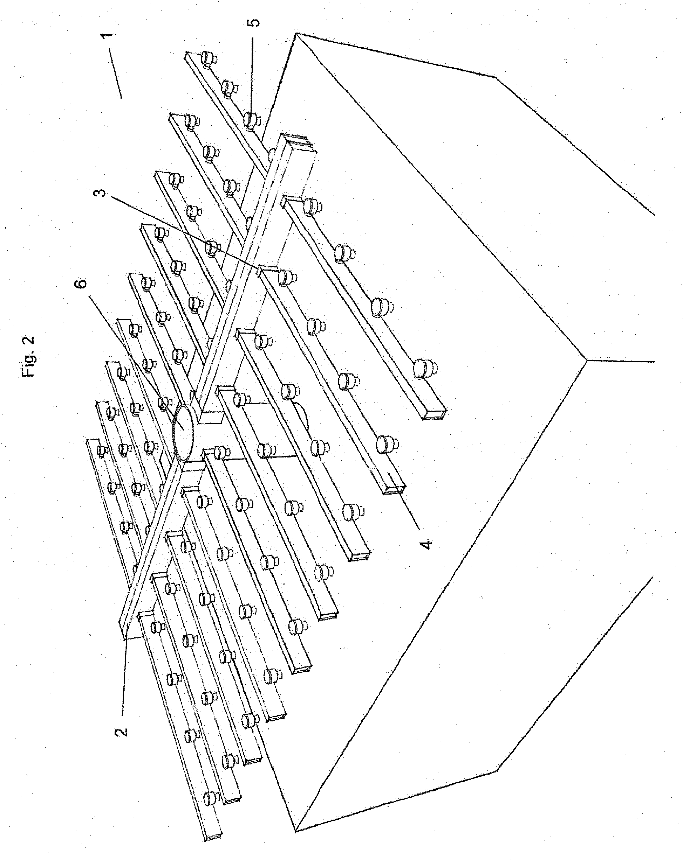

Die Fig. 2 bis 4 zeigen Flüssigkeitsausgestaltungen im Sinne der Erfindung.

Fig. 2 zeigt dabei eine erste Ausgestaltung der Flüssigkeitsverteileinrichtung 1 mit einem Steigrohr 6 und zwei Hauptverteilerrohren 2. Die Hauptverteilerrohre 2 sind hierbei aus glasfaserverstärktem Kunststoff hergestellt und weisen einen rechteckigen Querschnitt auf. Die Hauptverteilerrohre 2 weisen darüber hinaus reckeckige Ausnehmungen 3 zur einfachen Steckverbindung mit den Nebenverteilerrohren 4 auf. Die Nebenverteilerrohre 4 sind ebenfalls aus glasfaserverstärktem Kunststoff gefertigt und weisen einen rechteckigen Querschnitt auf. Sie sind hierbei parallel zueinander und im rechten Winkel zu den Hauptverteilerrohren ausgerichtet und äquidistant voneinander beabstandet angeordnet. Weiterhin verfügen die Nebenverteilerrohre über tangential angesetzte Düsen 5, welche im vorliegenden Beispiel als Vollkegeldüsen ausgebildet sind.

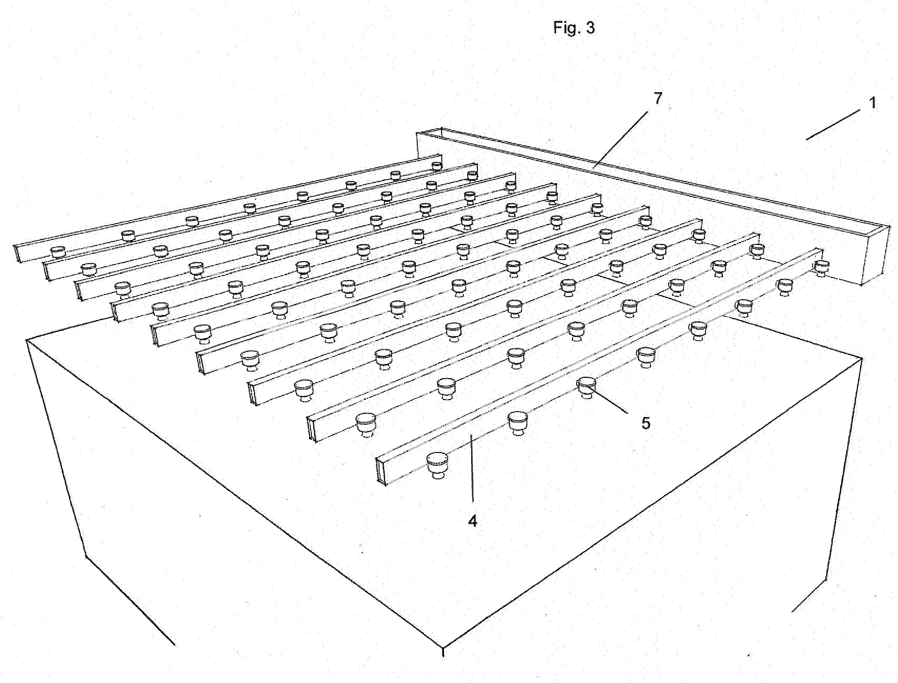

Fig. 3 zeigt eine zweite Ausgestaltung der Flüssigkeitsverteileinrichtung 1 mit einem Hauptverteilertrog 7. Der Hauptverteilertrog 7 ist hierbei aus Beton hergestellt und weist einen rechteckigen Querschnitt auf. Darüber hinaus weist der Hauptverteilertrog reckeckige Ausnehmungen 3 zur einfachen Steckverbindung mit den Nebenverteilerrohren 4 auf. Die Nebenverteilerrohre 4 sind aus glasfaserverstärktem Kunststoff gefertigt und weisen einen rechteckigen Querschnitt auf. Sie sind hierbei parallel zueinander und im rechten Winkel zu dem Hauptverteilertrog ausgerichtet und äquidistant voneinander beabstandet angeordnet. Weiterhin verfügen die Nebenverteilerrohre über tangential angesetzte Düsen 5, welche im vorliegenden Beispiel als Vollkegeldüsen ausgebildet sind. Das mit Fig. 3 gezeigte Ausführungsbeispiel beschreibt beispielhaft einen bereits bestehenden Kühlturm mit einer nachgerüsteten Flüssigkeitsverteileinrichtung im Sinne der Erfindung.

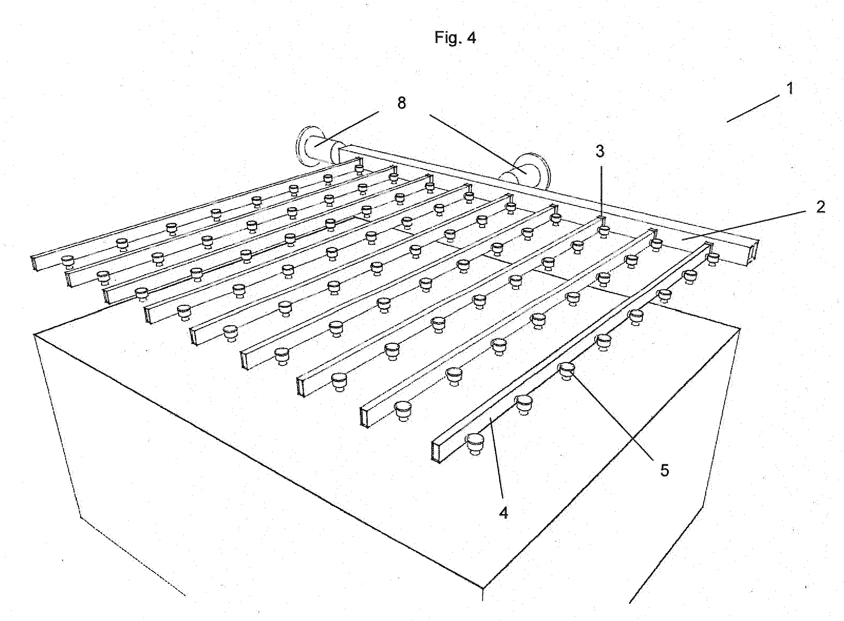

Fig. 4 zeigt eine dritte Ausgestaltung der Flüssigkeitsverteileinrichtung 1 mit zwei möglichen Positionen für einen Anschlussflansch 8 und einem Hauptverteilerrohr 2. Das Hauptverteilerrohr 2 ist hierbei aus glasfaserverstärktem Kunststoff hergestellt und weist einen rechteckigen Querschnitt auf. Das Hauptverteilerrohr 2 weist darüber hinaus rechteckige Ausnehmungen 3 zur einfachen Steckverbindung mit den Nebenverteilerrohren 4 auf. Die Nebenverteilerrohre 4 sind ebenfalls aus glasfaserverstärktem Kunststoff gefertigt und weisen einen rechteckigen Querschnitt auf. Sie sind hierbei parallel zueinander und im rechten Winkel zu dem Hauptverteilerrohr 2 ausgerichtet und äquidistant voneinander beabstandet angeordnet. Weiterhin verfügen die Nebenverteilerrohre über tangential angesetzte Düsen 5, welche im vorliegenden Beispiel als Vollkegeldüsen ausgebildet sind.

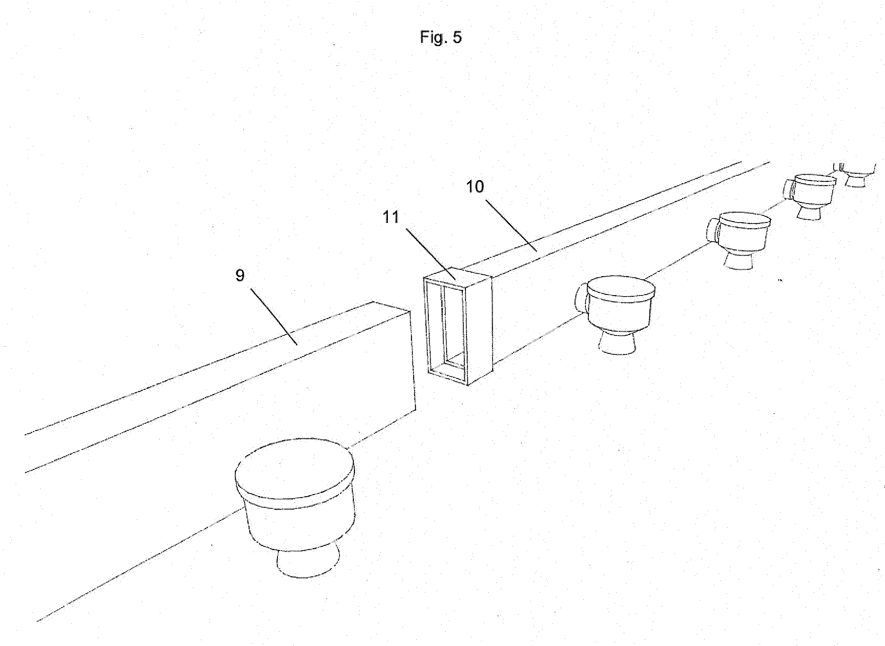

Fig. 5 zeigt die Verbindung zweier Nebenverteilerrohrsegmente 9, 10 zu einem Nebenverteilerrohr 4 mittels einer Manschette 11. Die Manschette 11 weist zu diesem Zweck einen rechteckigen Querschnitt auf und ist mit einem größeren Umfang als die Nebenverteilerrohre 4 ausgebildet. Die Nebenverteilerrohrsegmente 9, 10 können somit in einfacher Weise in die Manschette 11 eingesteckt werden. Vorliegend ist die Manschette 11 aus glasfaserverstärktem Kunststoff ausgebildet. Die erfindungsgemäße Ausgestaltung erlaubt die einfache und mechanisch stabile Verbindung der Nebenverteilerrohrsegmente 9, 10 und ermöglicht damit die Anpassung der Flüssigkeitsverteileinrichtung an jede gewünschte Flüssigkeitsverteilfläche. Insbesondere die Kombination aus eckigen Nebenverteilerrohrsegmente 9, 10 und einer eckigen Manschette 11 erbringt darüber hinaus den Vorteil der inhärent verdrehsicheren Verbindung der Nebenverteilerrohrsegmente 9, 10.

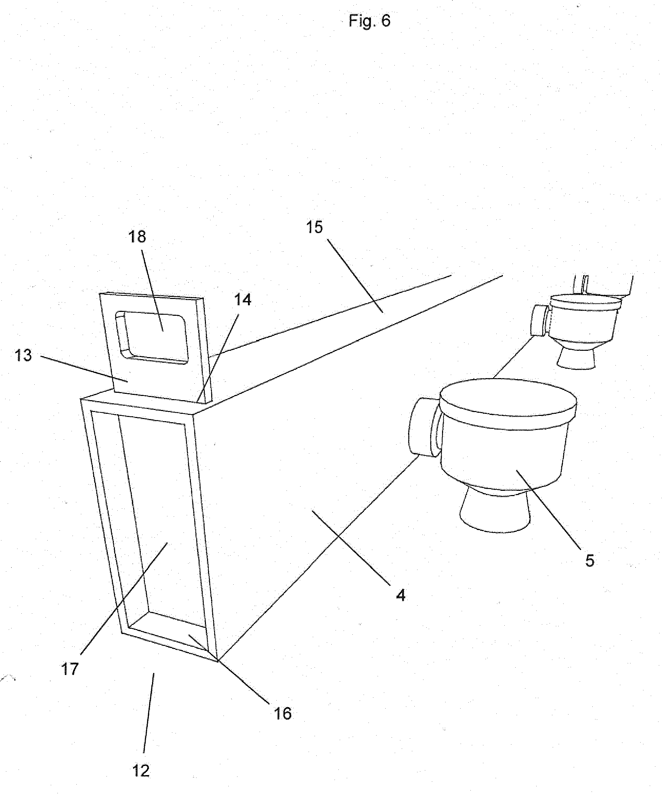

Fig. 6 zeigt eine Detailansicht eines Nebenverteilerrohrs 4 mit Vollkegeldüsen 5. Das dem Hauptverteilerrohr 2 (hier nicht gezeigt) abgewandte Ende 12 des Nebenverteilerohres 4 trägt eine Abschlusskappe 13. Die Anschlusskappe 13 erstreckt sich durch einen Schlitz 14 in der Oberwandung 15 des Nebenverteilerrohrs 4 bis zur Unterwandung 16 des Nebenverteilerrohrs 4 und verschließt damit die endseitige Öffnung 17 des Nebenverteilerrohrs 4. Durch den endseitigen Verschluss der Öffnung 17 wird eine Verminderung des Innendrucks wirksam vermieden und die Funktionstüchtigkeit der Düsen 5 gewährleistet. Es ist hierbei möglich, die Abschlusskappe insbesondere für Reinigungs- und Wartungsarbeiten durch einfaches Herausziehen aus dem Schlitz 14 zu entfernen. Hierfür verfügt die Abschlusskappe 13 über eine Ausnehmung 18, zur benutzerseitigen Handhabung. Der mit solchen Arbeiten verbundene Aufwand wird durch die erfindungsgemäße Ausgestaltung verringert. Der Einsatz einer solchen erfindungsgemäßen Verschlusskappe ist hierbei erst durch die Verwendung eckiger Rohrquerschnitte möglich, da der hierfür benötigte Schlitz 14 wesentlich länger, nämlich wenigstens den halben Umfang des runden Rohrquerschnitts umfassen müsste, um eine vollständige Abdeckung der endseitigen Öffnung des Rohrs zu gewährleisten. Die konstruktive Stabilität des Rohres wird hierdurch derart herabgesetzt, dass ein druckbedingtes Abreißen des Rohrendes nicht verhindert werden kann.

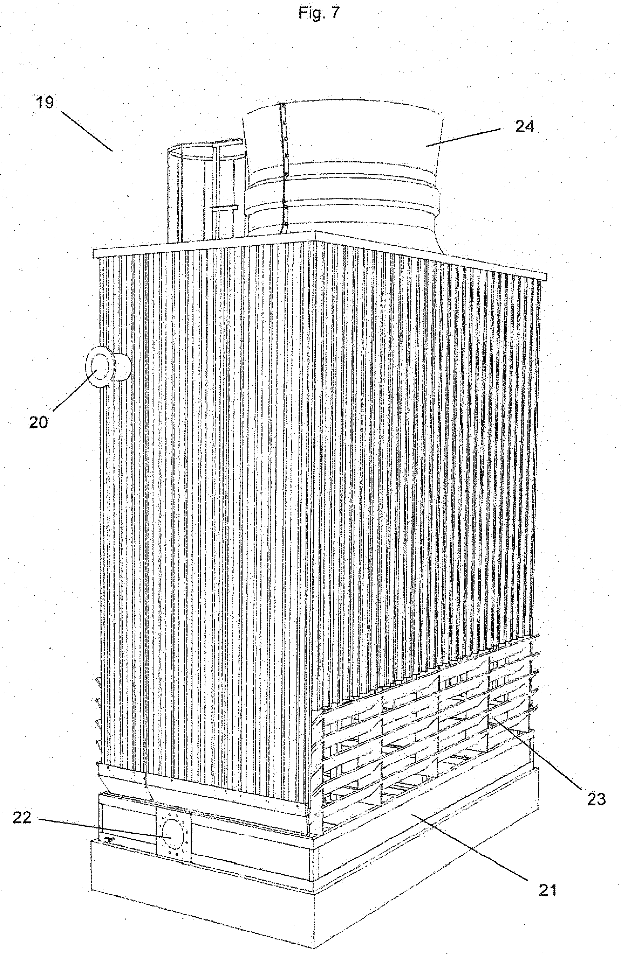

Fig. 7 zeigt eine Außenansicht eines aus dem Stand der Technik bekannten Kühlturms 19. Der Kühlturm 19 verfügt zum Anschluss einer Flüssigkeitsverteileinrichtung 1 über einen Flüssigkeitszulauf 20. Die mit der Flüssigkeitsverteileinrichtung 1 verteilte Flüssigkeit wird zum Zwecke der Kühlung an einem Luftstrom vorbeigeführt, im Flüssigkeitsbecken 21 gesammelt und über den Flüssigkeitsablauf 22 ihrem weiteren Bestimmungsort zugeführt. Zur Erzeugung des kühlenden Luftstroms verfügt der Kühlturm 19 unterhalb der Flüssigkeitsverteileinrichtung 1 über Lufteinlässe 23. Der Austritt der Kühlungsluft erfolgt über das Gehäuse 24, welches in Form eines Diffusors ausgebildet ist und den Luftauslass und einen Ventilator 25 beherbergt.

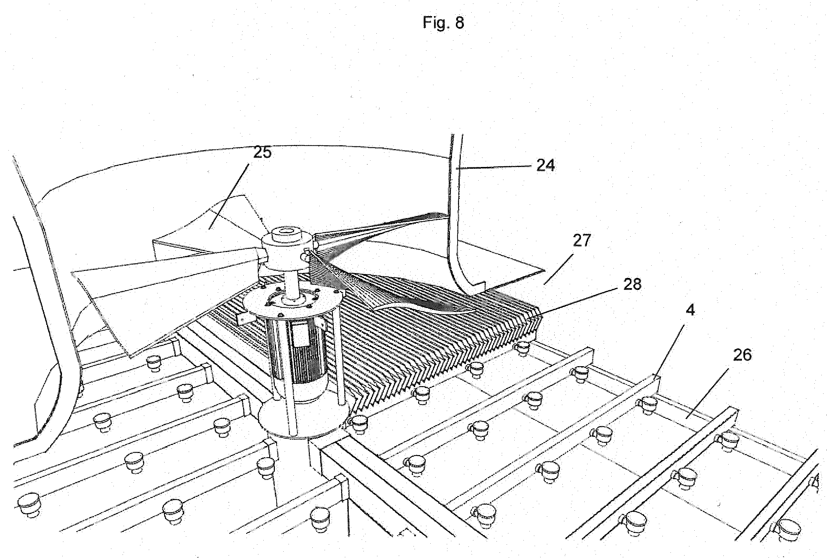

Fig. 8 zeigt ausschnittweise das Innere des Kühlturms 19 mit einer Flüssigkeitsverteileinrichtung 1 nach Fig. 2. Die rechteckigen Nebenverteilerrohre 4 sind vorliegend von den ebenfalls rechteckigen Querbalken 26 getragen. Es wird deutlich, dass die Auflagefläche der Nebenverteilerrohre 4 auf den Querbalken 26 wesentlich größer ist, als dies bei runden Nebenverteilerrohren der Fall wäre, die diese lediglich linienförmig auf den Querbalken 26 aufliegen. Die Kraftaufnahme des Querbalkens 26 ist hierdurch wesentlich verbessert und eine Deformation der Rohre wirkungsvoll unterbunden. Die Nebenverteilerrohre 4 tragen ihrerseits den Tropfenabscheider 27, welcher aus einer Vielzahl von Lamellen 28 besteht. Auch hier wird die Kontaktfläche zwischen Nebenverteilerrohr 4 und Lamelle 28 durch die rechteckige Ausgestaltung des Nebenverteilerrohrs 4 deutlich erhöht. Die Kraftaufnahme des Nebenverteilerrohrs 4 ist durch die vergrößerte Kontaktfläche wesentlich verbessert und eine Deformation der Lamellen 28 hierdurch vermindert bzw. in Gänze verhindert.

### Bezugszeichenliste

- 1: Flüssigkeitsverteileinrichtung
- 2: Hauptverteilerrohr
- 3: Ausnehmung
- 4: Nebenverteilerrohr
- 5: Düse
- 6: Steigrohr
- 7: Hauptverteilertrog
- 8: Anschlussflansch
- 9: Nebenverteilerrohrsegment
- 10: Nebenverteilerrohrsegment
- 11: Manschette
- 12: Ende des Nebenverteilerrohrs 4
- 13: Abschlusskappe
- 14: Schlitz
- 15: Oberwandung des Nebenverteilerrohrs 4
- 16: Unterwandung des Nebenverteilerrohrs 4
- 17: endseitige Öffnung des Nebenverteilerrohrs 4
- 18: Ausnehmung
- 19: Kühlturm
- 20: Flüssigkeitszulauf
- 21: Flüssigkeitsbecken
- 22: Flüssigkeitsablauf
- 23: Lufteinlässe
- 24: Gehäuse
- 25: Ventilator
- 26: Querbalken
- 27: Tropfenabscheider
- 28: Lamelle

## Patentansprüche

1. Kühlturmwasserkühleinrichtung für Kühltürme (19), mit einer Kühlturmwasserverteileinrichtung mit wenigstens einem Hauptverteilerrohr (2), wobei eine Mehrzahl von Nebenverteilerrohren (4) an das wenigstens eine Hauptverteilerrohr (2) angeschlossen sind, wobei die Nebenverteilerrohre (4) mit Düsen (5) ausgerüstet und aus einem glasfaserverstärkten Kunststoff (GFK) gebildet sind,
**dadurch gekennzeichnet,**
- **dass** die Nebenverteilerrohre (4) über ihre gesamte Längserstreckung einen rechteckigen Querschnitt mit einer in Höhenrichtung oberen Kontaktfläche und einer in Höhenrichtung unteren Auflagefläche aufweisen, wobei die Nebenverteiierrohre (4) mit ihren Auflageflächen auf Querbalken (26) aufliegen und wobei die Nebenverteilerrohre (4) mit ihren Kontaktflächen einen Tropfenabscheider (27) aufnehmen,
- **dass** die Düsen (5) tangential an eine die obere Kontaktfläche mit der unteren Auflagefläche verbindenden Seitenfläche angesetzt sind,
- wobei die Düsen in Höhenrichtung außermittig der Seitenfläche auflageflächennah an der Seitenfläche positioniert sind.

2. Kühlturmwasserkühleinrichtung nach Anspruch 1, **dadurch gekennzeichnet, dass** das wenigstens eine Hauptverteilerrohr (2) zumindest abschnittsweise einen eckigen Querschnitt aufweist und aus einem Faserverbundkunststoff gebildet ist.

3. Kühlturmwasserkühleinrichtung nach einem der vorhergehenden Ansprüche, **dadurch gekennzeichnet, dass** das wenigstens eine Hauptverteilerrohr (2) über seine gesamte Längserstreckung einen rechteckigen Querschnitt aufweist.

4. Kühlturmwasserkühleinrichtung nach einem der vorhergehenden Ansprüche, **dadurch gekennzeichnet, dass** das wenigstens eine Hauptverteilerrohr (2) als Vierkantrohre ausgebildet sind.

5. Kühlturmwasserkühleinrichtung gemäß einem der vorhergehenden Ansprüche, **dadurch gekennzeichnet, dass** der eckige Rohrquerschnitt der Nebenverteilerrohre (4) abgerundete Innenecken aufweist.

6. Kühlturmwasserkühleinrichtung gemäß einem der vorhergehenden Ansprüche, **dadurch gekennzeichnet, dass** wenigstens ein Nebenverteilerrohr (4) aus wenigstens zwei miteinander verbindbaren Rohrteilen gebildet ist.

## Claims

1. A cooling device for cooling tower water of cooling towers (19), comprising a cooling tower water distribution device having at least one main distribution pipe (2), wherein a plurality of branch distribution pipes (4) is connected to the at least one main distribution pipe (2), wherein the branch distribution pipes (4) are equipped with nozzles (5) and made of a glass fibre reinforced plastic (GFP),
**characterized in**
- **that** the branch distribution pipes (4) comprise a rectangular cross section over the entire longitudinal extension thereof with an upper contact surface in the direction of height and a lower bearing surface in the direction of height, wherein the branch distribution pipes (4) rest with the bearing surfaces thereof upon crossbeams (26) and wherein the contact surfaces of the branch distribution pipes (4) receive a droplet separator (27),
- **that** the nozzles (5) are tangentially attached to a side face connecting the upper contact surface with the lower bearing surface,
- wherein the nozzles are positioned on the side face, in the direction of height, eccentrically with respect to the side face and close to the bearing surface.

2. A cooling device for cooling tower water according to claim 1, **characterized in that** the at least one main distribution pipe (2) comprises a square cross section at least in some sections and is formed of a fibre composite plastic.

3. A cooling device for cooling tower water according to one of the preceding claims, **characterized in that** the at least one main distribution pipe (2) comprises a rectangular cross section over the entire longitudinal extension thereof.

4. A cooling device for cooling tower water according to one of the preceding claims, **characterized in that** the at least one main distribution pipe (2) is configured as a square pipe.

5. A cooling device for cooling tower water according to one of the preceding claims, **characterized in that** the square pipe cross section of the branch distribution pipes (4) comprises rounded inner corners.

6. A cooling device for cooling tower water according to one of the preceding claims, **characterized in that** at least one branch distribution pipe (4) is formed by at least two pipe parts which can be connected to each other.

## Revendications

1. Dispositif de refroidissement d'eau d'un tour de refroidissement destiné à des tours de refroidissement (19), comprenant un dispositif de distribution d'eau de tour de refroidissement comprenant au moins un tuyau principal de distribution (2), une pluralité de tuyaux secondaires de distribution (4) étant connectée à l'au moins un tuyau principal de distribution (2), les tuyaux secondaires de distribution (4) étant équipés de buses (5) et étant fabriqués en un plastique renforcé de fibres de verre (PRV),
**caractérisé en ce**
- **que** les tuyaux secondaires de distribution (4) comprennent une section transversale rectangulaire sur leur extension longitudinale entière avec une surface de contact supérieure dans la direction de hauteur et une surface d'appui inférieure dans la direction de hauteur, les tuyaux secondaires de distribution (4) s'appuyant avec leurs surfaces d'appui sur des barres transversales (26) et les tuyaux secondaires de distribution (4) recevant un séparateur de gouttes (27) par leurs surfaces de contact,
- **que** les buses (5) sont attachées de manière tangentielle à une surface latérale, qui relie la surface de contact supérieure à la surface d'appui inférieure,
- les buses étant positionnées sur la surface latérale de manière excentrée dans la direction de hauteur par rapport à la surface latérale et étant proches de la surface d'appui.

2. Dispositif de refroidissement d'eau d'un tour de refroidissement selon la revendication 1, **caractérisé en ce que** l'au moins un tuyau principal de distribution (2) comprend une section transversale anguleuse, au moins dans quelques sections, et est formé en un plastique composé de fibres.

3. Dispositif de refroidissement d'eau d'un tour de refroidissement selon l'une des revendications précédentes, **caractérisé en ce que** l'au moins un tuyau principal de distribution (2) comprend une section transversale rectangulaire sur l'extension longitudinale entière de celui-ci.

4. Dispositif de refroidissement d'eau d'un tour de refroidissement selon l'une des revendications précédentes, **caractérisé en ce que** l'au moins un tuyau principal de distribution (2) est configuré comme un tube carré.

5. Dispositif de refroidissement d'eau d'un tour de refroidissement selon l'une des revendications précédentes, **caractérisé en ce que** la section transversale de tube anguleuse des tuyaux secondaires de distribution (4) comprend des coins intérieurs arrondis.

6. Dispositif de refroidissement d'eau d'un tour de refroidissement selon l'une des revendications précédentes, **caractérisé en ce que** l'au moins un tuyau secondaire de distribution (4) est formé par au moins deux éléments de tuyau susceptibles d'être reliés l'un à l'autre.
